Europäisches Patentamt

European Patent Office

Office européen des brevets

(11) Veröffentlichungsnummer: **0 223 092**

**A2**

(12) # EUROPÄISCHE PATENTANMELDUNG

(21) Anmeldenummer: **86114603.3**

(22) Anmeldetag: **21.10.86**

(51) Int. Cl.⁴: **G01N 27/30**

(30) Priorität: **21.10.85 DE 3537395**

(43) Veröffentlichungstag der Anmeldung:
**27.05.87 Patentblatt 87/22**

(84) Benannte Vertragsstaaten:
**CH FR GB LI**

(71) Anmelder: **Metallglanz Gesellschaft für Entgratung und Oberflächentechnik mbH Industriestrasse 121 D-7130 Mühlacker(DE)**

(72) Erfinder: **Heerde, Manfred Eintrachtstrasse 95 D-4330 Mülheim/Ruhr(DE)**
Erfinder: **von Hofmann, Timm Haldenstrasse 71 D-7130 Mühlacker(DE)**

(74) Vertreter: **Puschmann, Heinz H. et al Spott und Puschmann Patentanwälte Sendlinger-Tor-Platz 11 D-8000 München 2(DE)**

(54) **Metallische Indikatorelektrode zur komplexometrischen bzw. chelatometrischen Potentiometrie.**

(57) Metallische Indikatorelektrode zur Verwendung bei einem Verfahren zur quantitativen Bestimmung von Metallen und Komplexbildnern durch komplexometrische bzw. chelatometrische Potentiometrie, bestehend aus einem Verbundkörper aus a) Gold oder einer Goldlegierung und b) Kupfer oder einer Kupferlegierung, welcher auf seiner Oberfläche eine Diffusionsschicht aus Quecksilber bzw. Quecksilberamalgam aufweist.

Fig. 1

EP 0 223 092 A2

## Metallische Indikatorelektrode zur komplexometrischen bzw. chelatometrischen Potentiometrie

Die Erfindung betrifft eine metallische Indikatorelektrode zur Verwendung bei einem Verfahren zur quantitativen Bestimmung von Metallen und Komplexbildnern durch komplexometrische bzw. chelatometrische Potentiometrie.

Die potentiometrische Titration oder auch potentiometrische Endpunktbestimmung stellt ein auf den Prinzipien der Maßanalyse aufbauendes Verfahren dar, bei dem durch Potentialmessung an einer zu analysierenden Elektrolytlösung Rückschlüsse auf deren Zusammensetzung gezogen werden können. Im Unterschied zu den meisten Methoden der Maßanalyse wird bei der Potentiometrie der für die Analyse benötigte Äquivalenzpunkt nicht durch das Auftreten eines über einen Indikator vermittelten Farbumschlags angezeigt, sondern durch eine physikalisch-chemische Größe, nämlich den sogenannten Potentialsprung. Hierbei wird die Potentialdifferenz zwischen einer sogenannten Indikatorelektrode und einer geeigneten Bezugselektrode, welche im allgemeinen die Kalomelelektrode ist, wobei sich beide Elektroden in der zu analysierenden Elektrolytlösung befinden, in Abhängigkeit von der zuzugebenden Reagenzlösung verfolgt. Bei den sogenannten komplexometrischen bzw. chelatometrischen Titrationen werden beispielsweise bezüglich ihrer Normalität oder Molarität exakt eingestellte Lösungen von Komplexbildnern bzw. Chelatbildnern verwendet, welche mit den Ionen des in der jeweiligen Analysenlösung enthaltenen Metalls reagieren, nämlich einen Komplex oder ein Chelat bilden. In Abhängigkeit von der zugegebenen Menge an Reagenzlösung, und somit der verbrauchten Menge an in der Analysenlösung enthaltenen und zu analysierenden Metallionen, ändert sich bei solchen potentiometrischen Komplexbildungstitrationen bzw. Chelatbildungstitrationen die Potentialdifferenz zwischen den beiden Meßelektroden - (Indikatorelektrode und Bezugselektrode) einer bestimmten Kurve ent sprechend. Am sogenannten Äquivalenzpunkt, nämlich dem potentiometrischen Endpunkt, kommt es dann zu einer Änderung der Konzentration um meist Zehnerpotenzen, was sich an einer entsprechenden Änderung der Potentialdifferenz äußert. Dieser Äquivalenzpunkt dient daher als Maß für die Konzentration der sich bei der jeweiligen Tritationsreaktion umsetzenden Substanzen, wie beispielsweise Metallionen, und ist mit dem Auftreten eines sogenannten Potentialsprungs verbunden, welcher den Endpunkt der Titration anzeigt. Hierbei wird also die Potentialdifferenz zwischen den Elektroden einer galvanischen Kette aus der Indikatorelektrode und der Bezugselektrode gemessen, welche normalerweise beide mit der Analysenlösung in elektrolytischer Verbindung stehen.

Für die industrielle Anwendung der Potentiometrie gibt es sogenannte Titrierautomaten.

Je nach Art und Zusammensetzung der zu analysierenden Lösung und der bei der Titrationsreaktion umzusetzenden, darin enthaltenen Substanzen, wie beispielsweise Ionen einwertiger, zweiwertiger oder noch höherwertiger Metalle, versetzt man die jeweilige Analysenlösung gegebenenfalls auch mit Hilfsstoffen, welche die Analyse der jeweiligen Komponente begünstigen, erleichtern oder überhaupt auch erst ermöglichen. Hierzu gehören beispielsweise sogenannte Puffersubstanzen, die dafür sorgen, daß sich während einer bestimmten Reaktion der pH-Wert der entsprechenden Analysenlösung nicht ändert, so daß die jeweilige potentiometrische Endpunktbestimmung insgesamt unter einem bestimmten pH-Wert der Lösung durchgeführt werden kann, welcher die gewünschte saubere Analyse der jeweiligen Substanz, wie der Ionen des entsprechenden Metalls, ermöglicht. Solche Puffersubstanzen oder Pufferlösungen sind dem Fachmann geläufig. Gleiches gilt im übrigen auch bezüglich der Frage, auf welchen genauen pH-Wert die jeweils zu analysierende Lösung gepuffert werden soll, da mit sich die in ihr enthaltenen Ionen am saubersten und gegebenenfalls sogar überhaupt analysieren lassen.

Bei potentiometrischen Endpunktbestimmungen der obigen Art, und somit auch bei der quantitativen Bestimmung von Metallen und Komplexbildnern in entsprechenden Analysenlösungen durch komplexometrische bzw. chelatometrische Potentiometrie, werden als Indikatorelektroden auch bereits sogenannte ionensensitive Elektroden angewandt. Diese bekannten Elektroden haben jedoch den Nachteil, daß sie bei den in Rede stehenden Verfahren einer starken Driftung und laufenden Änderung ihres Eigenpotentials unterliegen. Sie sind daher vor allem auch für eine kontinuierliche Endpunktbestimmung nur bedingt oder überhaupt nicht verwendbar. Weiter sind sie auch nur für eine relativ begrenzte Zahl an Metallen spezifisch, und - schließlich erfordern diese Elektroden einen komplizierten Aufbau, so daß sie verhältnismäßig teuer und auch nur aufwendig zu warten sind. Eine automatische kontinuierliche Analyse, wie sie heute für die Überwachung der verschiedensten chemischen Prozeßlösungen gefordert wird, ist mit den bekannten ionensensitiven Elektroden daher entweder überhaupt nicht oder nur begrenzt möglich.

Der Erfindung liegt daher die Aufgabe zugrunde, eine neue metallische Indikatorelektrode zur komplexometrischen bzw. chelatometrischen Potentiometrie zu schaffen, die bei ihrer Anwendung praktisch keiner Driftung und Änderung des Eigenpotentials unterliegt, für viele Metalle direkt oder indirekt spezifisch ist und infolge ihres einfachen Aufbaus billig in ihrer Herstellung und leicht in ihrer Wartung ist, so daß sich diese Elektrode mit besonderen Vorteilen bei einer automatischen und kontinuierlichen quantitativen potentiometrischen Analyse metallhaltiger chemischer Prozeßlösungen oder auch Komplexbildner bzw. Chelatbildner enthaltender Lösungen verwenden läßt.

Diese Aufgabe wir nun erfindungsgemäß durch eine metallische Indikatorelektrode der eingangs genannten Art gelöst, die dadurch gekennzeichnet ist, daß sie aus einem Verbundkörper aus
a) Gold oder einer Goldlegierung und
b) Kupfer oder einer Kupferlegierung
besteht, welcher auf seiner Oberfläche eine Diffusionsschicht aus Quecksilber bzw. Quecksilberamalgam aufweist.

Wesentlich für die erfindungsgemäße Indikatorelektrode ist somit ihr Aufbau als Verbundkörper, dessen einer Teil aus der Komponente a), nämlich Gold oder einer Goldlegierung, und dessen zweiter Teil aus der Komponente b), nämlich Kupfer oder einer Kupferlegierung, besteht. Beide Teile dieser Elektrode sind in geeigneter Weise leitend miteinander verbunden, wobei diese Verbindung beispielsweise durch Verschrauben, Verlöten, Vernieten oder gegebenenfalls sogar Verkleben hergestellt werden kann. Zum gegenseitigen Verlöten beider Teile lassen sich übliche Lote verwenden, wie Goldlote oder auch Kupferlote. Besonders vorteilhaft ist es, wenn beide Teile in einer Art und Weise miteinander verbunden sind, welche eine leichte Delaborierung ermöglicht, da sich in einem solchen Fall das bei der bestimmungsgemäßen Anwendung der Indikatorelektrode einem stärkeren Verschleiß ausgesetzte Teil,nämlich der aus Kupfer oder einer Kupferlegierung b) bestehende Teil, ohne weiteres demontieren und durch ein neues Teil ersetzen läßt. Dieser Möglichkeit wird vor allem eine Elektrode gerecht, bei der die den Verbundkörper bildenden Teile a) und b) über eine Schraubverbindung miteinander verbunden sind.

Als erfindungsgemäße metallische Indikatorelektrode eignen sich natürlich auch Verbundkörper, die nicht nur zweiteilig aus den Komponenten a) und b) aufgebaut sind, sondern deren Aufbau mehrteilig ist, so daß sich die Kompo nenten a) und b) in einem solchen mehrteiligen Verbundkörper daher alternierend abwechseln. Aus Gründen einer einfacheren Konstruktion wird dem zweiteiligen Aufbau des die erfindungsgemäße metallische Indikatorelektrode bildenden Verbundkörpers jedoch der Vorzug gegeben.

Die erfindungsgemäße Indikatorelektrode, nämlich der Verbundkörper aus den Komponenten a) und b), muß auf ihrer Oberfläche eine Diffusionsschicht aus Quecksilber bzw. Quecksilberamalgam aufweisen. Eine solche Oberflächenschicht wird unter Anwendung üblicher Maßnahmen gebildet, indem man den jeweiligen Verbundkörper beispielsweise während einer gewissen Zeitdauer mittels einer Quecksilber enthaltenden Lösung amalgamiert. Hierzu eignen sich beispielsweise wäßrige Lösungen wasserlöslicher Quecksilbersalze, wie Quecksilbernitrat oder Quecksilbersulfat. Die zur Bildung der benötigten Oberflächendiffusionsschicht aus Quecksilber bzw. Quecksilberamalgam erforderlichen Maßnahmen sind dem Fachmann bekannt. Sie sollen normalerweise für eine Diffusionsschicht sorgen, die eine Stärke von etwa 1 μm bis etwa 5 μm aufweist.

Die erfindungsgemäße Indikatorelektrode kann im Prinzip aus irgendeinem Verbundkörper bestehen, bei dem die Komponente a) und die Komponente b) jeweils in einem bestimmten Gewichtsverhältnis zueinander vorhanden sind, so daß eine dieser Komponenten beispielsweise nur etwa 10 Gew.-% des gesamten Verbundkörpers ausmachen und dementsprechend die andere Komponente etwa 90 Gew.-% des gesamten Verbundkörpers betragen kann. Der die erfindungsgemäße metalli-sche Indikatorelektrode bildende Verbundkörper setzt sich im allgemeinen zusammen aus etwa 30 bis 70 Gew.-%, vorzugsweise etwa 40 bis 60 Gew.-%, und insbesondere aus etwa 50 Gew.-%, der Komponente a), so daß dementsprechend die Komponente b) im allgemeinen etwa 70 bis 30 Gew.-%, vorzugsweise etwa 60 bis 40 Gew.-%, und insbesondere etwa 50 Gew.-%, ausmacht.

Die Komponenten a) und b) können, wie bereits erwähnt, aus den jeweiligen Reinmetallen oder entsprechenden Legierungen bestehen. Vorzugsweise sind beide Komponenten der erfindungsgemäßen Indikatorelektrode Reinmetalle, nämlich Feingold im Falle der Komponente a) und Elektrolytkupfer im Falle der Komponente b). Weiter, wenn auch weniger bevorzugt, können die Komponenten a) und b) auch Legierungen sein, deren Grundmetallgehalt im allgemeinen weningstens etwa 50 Gew.-%, vorzugsweise wenigstens etwa 75 Gew.-%, und insbesondere wenigstens etwa 85 Gew.-%, beträgt.

Geeignete Goldlegierungen sind beispielsweise Legierungen aus 85 Gew.-% Gold und 15 Gew.-% Kupfer.

Geeignete Kupferlegierungen sind beispielsweise Legierungen aus 90 Gew.-% Kupfer und 10 Gew.-% Zink.

Die Komponenten a) und b) des die erfindungsgemäße Elektrode bildenden Verbundkörpers können, wie bereits angegeben, in irgendeiner Art und Weise miteinander verbunden sein, die für eine leitende Verbindung sorgt. Sie sind am besten so miteinander verbunden, daß beide Teile einfach voneinander getrennt und gegebenenfalls durch ein entsprechendes neues Teil ersetzt werden können.

Für die Wirkungsweise der erfindungsgemäßen metallischen Indikatorelektrode ist es im Prinzip gleich, ob die aus Gold oder einer Goldlegierung bestehende Komponente a) Das Anfangsteil oder das Endteil der Elektrode bildet, nämlich das mit dem Spannungsmeßgerät, im allgemeinen einem Millivoltmeter, zu verbindende Teil oder das nur in der zu analysierenden Lösung befindliche Teil. Da die Komponente a) der erfindungsgemäßen Elektrode jedoch zwangsläufig einem geringeren Verschleiß unterliegt als die Komponente b) wird für den diese Elektrode bildenden Verbundkörper jedoch ein Aufbau bevorzugt, bei dem die Komponente a) das Anfangsteil und die Komponente b) das Endteil bildet.

Der die erfindungsgemäße metallische Indikatorelektrode bildende Verbundkörper kann bezüglich seiner einzelnen Teile jede hierzu geeignete Form haben, und dies bedeutet, daß die der Komponente a) und der Komponente b) entsprechenden Körper jeweils gleichförmig oder auch verschiedenförmig sein können. Beide Teile können daher beispielsweise stäbchenförmige oder stiftförmige Körper sein, die in geeigneter Weise miteinander verbunden sind. Stäbchenförmige oder stiftförmige Körper sind vor allem als Anfangsteil der jeweiligen Elektrode bevorzugt, da sich hierdurch eine leichtere Anordnung in dem jeweils als Isolierung gegenüber dem Elektrodenanschluß vorhanden Glasröhrchen oder Kunststoffröhrchen ergibt. Das Endteil einer solchen Elektrode kann dann ebenfalls ein stäbchenförmiger oder stiftförmiger Körper sein oder es kann sich dabei um irgendeinen Körper beliebiger Gestalt handeln, wie beispielsweise einen kugelförmigen Körper, einen gegenüber dem Anfangsteil größeren zylindrischen Körper oder auch einen auf den als Anfangsteil dienenden stäbchenförmigen oder stiftförmigen Körper zentral aufgesetzten - scheibenförmigen Körper.

Bei einer bevorzugten erfindungsgemäßen Elektrode besteht der sie bildende Verbundkörper aus einem stäbchenförmigen oder stiftförmigen Körper aus der Komponente a) als Anfangsteil und aus einem an dessen einem Ende befindlichen kugelförmigen Körper aus der Komponente b) als Endteil. Bei dieser Ausführungsform ist ein Aufbau bevorzugt, dessen stäbchenförmiger oder stiftförmiger Körper eine Länge von etwa 8 bis 12 mm, vorzugsweise etwa 10 mm, und einen Durchmesser von etwa 1,5 bis 2,5 mm, vorzugweise etwa 2 mm, hat und dessen kugelförmiger Körper einen Durchmesser von etwa 4 bis 6 mm, vorzugsweise etwa 5 mm, aufweist.

Einige mögliche Ausführungsformen für erfindungsgemäße metallische Indikatorelektroden gehen aus der Zeichnung hervor.

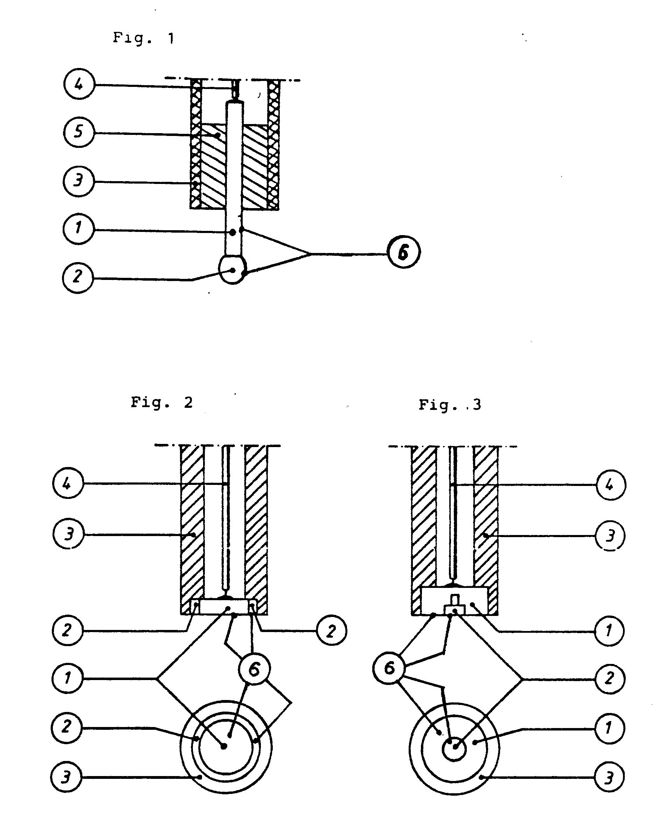

Die Figur 1 zeigt eine mögliche Ausführungsform einer erfindungsgemäßen Elektrode, wie sie auch bei den späteren Beispielen 1 und 2 verwendet wird. Diese metallische Indikatorelektrode besteht aus einem 10 mm langen und einen Durchmesser von 2 mm aufweisenden Feingolddraht 1, an den mittels eines Goldlots ein kugelförmiger Kupferkörper 2 (Elektrolytkupfer) mit einem Durchmesser von etwa 4 mm angelötet ist. Am Feingolddraht 1 ist der Elektrodenanschluß 4 befestigt. Das Elektrodengehäuse bildet ein Glasröhrchen 3 in welchem die Elektrode (Verbundkörper) mittels einer Dichtungsmasse 5 dichtschliessend fixiert ist. Auf der Oberfläche des aus dem Feingolddraht 1 und dem Kupferkörper 2 bestehenden Verbundkörpers der Elektrode ist eine etwa 2 $\mu$m bis etwa 4 $\mu$m starke Diffusionsschicht 6 aus Quecksilber bzw. Quecksilberamalgan angeordnet, die durch kurzzeitige Behandlung des Verbundkörpers mit einer wäßrigen Lösung von Quecksilbernitrat erzeugt worden ist.

Die Figuren 2 und 3 zeigen weitere Beispiele für mögliche Formen der erfindungsgemäßen Indikatorelektrode. Die darin angeführten Bezugszeichen haben die oben im Zusammenhang mit der Figur 1 angegebenen Bedeutungen.

Die soeben beschriebene und in der Zeichnung dargestellte Ausführungsform einer erfindungsgemäßen metallischen Indikatorelektrode wird auch bei den später folgenden Beispielen, welche die Anwendung einer solchen Elektrode bei einem Verfahren zur komplexometrischen bzw. chelatometrischen Potentiometrie zeigen, verwendet.

Die erfindungsgemäße Elektrode spricht in Verbindung mit einer geeigneten handelsüblichen Bezugselektrode, wie beispielsweise der Kalomelelektrode, in entsprechend gepufferten kupferhaltigen Analysenlösungen spezifisch auf Kupferionen an und ergibt hierbei nach komplexometrischer bzw. chelatometrischer Bindung aller Kupferionen einen deutlichen und von der Art und Weise der sonstigen Zusammensetzung der zu analysierenden Lösung praktisch unabhängigen Potentialsprung, der einwandfrei ausgewertet werden kann. Sie ermöglicht also in Verbindung mit einem geeigneten Komplexbildner oder Chelatbildner eine direkte quantitative Bestimmung des Kupfergehalts der jeweiligen Analysenlösung. In indirekter Weise lassen sich mit der erfindungsgemäßen metallischen Indikatorelektrode jedoch genauso gut auch Lösungen analysieren, die Ionen anderer Metalle als von Kupfer enthalten, indem man die in der jeweils zu analysierenden Lösung vorhandenen Metallionen, gegebenenfalls nach Einstellung auf den jeweils günstigsten pH-Wert, zunächst durch Zugabe eines genau definierten Überschusses einer Lösung eines Komplexbildners oder Chelatbildners zur Reaktion bringt und hierdurch bindet, und den nicht an das jeweilige Metall gebundenen Überschuß der Lösung der Komplexbildners oder Chelatbildners dann so lange mit einer bezüglich ihrer Molarität oder Normalität eingestellten Kupferlösung rücktitriert, bis bei Bindung aller vorhandenen Kupferionen wieder der jeweilige deutliche Potentialsprung auftritt.

In analoger Anwendung der obigen Maßnahmen eignet sich die erfindungsgemäße metallische Indikatorelektrode daher auch zur quantitativen Bestimmung der in entsprechenden Analysenlösungen enthaltenen Menge an verschiedenen Komplexbildnern oder Chelatbildnern.

Die erfindungsgemäße metallische Indikatorelektrode ist daher eine universelle Elektrode, die direkt für Kupfer spezifisch und somit indirekt auch für die verschiedensten anderen Metalle spezifisch ist und unter deren Verwendung sich fallweise auch Komplexbildner oder Chelatbildner spezifisch bestimmen lassen. Sie unterliegt bei ihrer Anwendung praktisch keiner Änderung ihres Eigenpotentials und ist einfach aufgebaut, so daß sie nicht nur preisgünstig herstellbar sondern auch leicht zu warten ist. Zudem zeichnet sich diese Elektrode durch eine lange Lebensdauer und hohe Funktionssicherheit aus. Sie ist den bekannten metallischen Indikatorelektroden, wie sie beispielsweise ebenfalls bei Verfahren zur quantitativen Bestimmung von Metallen und Komplexbildnern durch komplexometrische bzw. chelatometrische Potentiometrie verwendet werden, daher in einer Reihe von Eigenschaften überlegen. Alle diese besonderen Eigenschaften machen sie vor allem als Indikatorelektrode bei einem kontinuierlichen und automatischen Analysenbetrieb unter Anwendung der Potentiometrie besonders geeignet.

Die Wirkungsweise der in Figur 1 der Zeichnung beschriebenen Ausführungsform einer erfindungsgemäßen metallischen Indikatorelektrode bei der komplexometrischen bzw. chelatometrischen Potentiometrie zur quantitativen Bestimmung der in entsprechenden Analysenlösungen vorhandenen Komponenten wird durch die folgenden Beispiele näher erläutert und belegt.

Beispiel 1

Als Versuchsapparatur wird eine Anordnung aus einem auf einem Magnetrührer befindlichen, 250 ml fassenden Becherglas, in welches die in Figur 1 der Zeichnung dargestellte erfindungsgemäße Indikatorelektrode und als Bezugselektrode eine Kalomelelektrode (Typ 303 der Firma Imgold) eingesetzt ist, welche beide über ein Millivoltmeter (Typ CG 817 der Firma Jenaer Glaswerk Schott & Gen., Mainz) miteinander verbunden sind, und über welchem eine 50 ml fassende Glasbürette angeordnet ist, verwendet.

Das Becherglas wird zunächst mit 10 ml einer wäßrigen (destilliertes Wasser) Lösung von Kupfersulfat beschickt, welche 65 mg Kupfer enthält. Hierauf gibt man unter Rühren mit dem Magnetrührer 100 ml destilliertes Wasser zu und stellt das Ganze durch Zusatz von 25 ml einer Pufferlösung - (zusammengesetzt aus 300 g Natriumacetat und 300 ml konzentrierter Essigsäure in 1000 ml Wasser) auf einen pH-Wert von 4,8 ein. Sodann taucht man die erfindungsgemäße Indikatorelektrode zusammen mit der Kalomelelektrode in die Lösung und titriert in diese Lösung mittels der Bürette eine 0,1 m wäßrige Lösung von Ethylendiamintetraessigsäure-Dinatriumsalz ein. Der Endpunkt der Titration äußert sich durch einen Potentialsprung von etwa 60 mV. Anhand der verbrauchten Normallösung von Ethylendiamintetraessigsäure-Dinatriumsalz wird dann der Kupfergehalt der Ausgangslösung in üblicher Weise rechnerisch ermittelt. Der hierbei erhaltene Wert entspricht der in der Ausgangslösung vorhandenen Kupfermenge.

Beispiel 2

Es wird die im Beispiel 1 beschriebene Versuchsapparatur verwendet.

Das Becherglas wird zunächst mit 10 ml einer wäßrigen (destilliertes Wasser) Lösung von Nickelsulfat beschickt, welche 50 mg Nickel enthält. Hierauf gibt man unter Rühren mit dem Magnetrührer 100 ml destilliertes Wasser zu, stellt das Ganze durch Zusatz von 25 ml einer Pufferlösung - (zusammengesetzt aus 350 ml konzentriertem Ammoniumhydroxid und 54 g Ammoniumchlorid in 1000 ml Wasser) auf einen pH-Wert von 10,0 ein und gibt dann mittels einer Pipette genau 20 ml einer 0,1 m wäßrigen Lösung von Ethylendiamintetraessigsäure-Dinatriumsalz zu. Sodann taucht man die erfindungsgemäße Indikatorelektrode zusammen mit der Kalomelelektrode in die Lösung und titriert die nicht von den Nickelionen gebundene Menge an überschüssigem Komplexbildner bzw. Chelatbildner mittels der mit einer 0,1 m Lösung von Kupfersulfat gefüllten Bürette bis zum Potentialsprung von 60 mV zurück. Anhand der ursprünglich zugesetzten Menge der Normallösung von Ethlylendiamintetraessigsäure-Dinatriumsalz und der dann bis zum Potentialsprung bei der Rücktitration verbrauchten Menge der Normallösung an Kupfersulfat läßt sich dann in indirekter Weise wiederum der Nickelgehalt der Ausgangslösung rechnerisch ermitteln. Der hierbei erhaltene Wert entspricht der in der Ausgangslösung vorhandenen Nickelmenge.

In analoger Weise wie beim obigen Beispiel lassen sich indirekt auch viele andere Metalle, die in einer entsprechenden Lösung vorhanden sein können, bestimmen, wie beispielsweise Aluminium, Antimon, Arsen, Barium, Blei, Cadmium, Calcium, Chrom, Eisen, Gallium, Indium, Cobalt, Magnesium, Mangan, Nickel, Quecksilber, Strontium, Thorium, Vanadium, Wismut, Zink, Zinn oder Zirconium. Die hierzu im einzelnen speziell anzuwendenen Maßnahmen sind dem Fachmann bekannt oder liegen im Rahmen des fachmännischen Könnens.

Es ist natürlich weiter auch möglich, durch die im obigen Beispiel beschriebene indirekte Bestimmungsmethode quantitativ die Menge an Komplexbildner bzw. Chelatbildner zu bestimmen, die in einer entsprechenden Lösung vorhanden ist. Solche Komplexbildner bzw. Chelatbildner sind beispielsweise Nitriloessigsäure, Ethylendiamintetraessigsäure, das bereits erwähnte Ethylendiamintetraessigsäure-Dinatriumsalz, Diethylentriaminpentaessigsäure oder DCTA.

## Ansprüche

1. Metallische Indikatorelektrode zur Verwendung bei einem Verfahren zur quantitativen Bestimmung von Metallen und Komplexbildnern durch komplexometrische bzw. chelatometrische Potentiometrie, dadurch gekennzeichnet, daß sie aus einem Verbundkörper aus
a) Gold oder einer Goldlegierung und
b) Kupfer oder einer Kupferlegierung
besteht, welcher auf seiner Oberfläche eine Diffusionsschicht aus Quecksilber bzw. Quecksilberamalgam aufweist.

2. Elektrode nach Anspruch 1, dadurch gekennzeichnet, daß der sie bildende Verbundkörper aus etwa 30 bis 70 Gew.-% der Komponente a) und dementsprechend etwa 70 bis 30 Gew.-% der Komponente b) besteht.

3. Elektrode nach Anspruch 2, dadurch gekennzeichnet, daß der sie bildende Verbundkörper aus etwa 40 bis 60 Gew.-% der Komponente a) und dementsprechend etwa 60 bis 40 Gew.-% der Komponente b) besteht.

4. Elektrode nach Anspruch 3, dadurch gekennzeichnet, daß der sie bildende Verbundkörper aus etwa 50 Gew.-% der Komponente a) und etwa 50 Gew.-% der Komponente b) besteht.

5. Elektrode nach einem der Ansprüche 1 bis 4, dadurch gekennzeichnet, daß die Komponente a) und/oder die Komponente b) aus entsprechenden Reinmetallen besteht.

6. Elektrode nach einem der Ansprüche 1 bis 4, dadurch gekennzeichnet, daß die Komponente a) und/oder die Komponente b) aus entsprechenden Legierungen besteht, deren Goldgehalt bzw. Kupfergehalt wenigstens etwa 50 Gew.-%, vorzugsweise wenigstens etwa 75 Gew.-%, insbesondere wenigstens etwa 85 Gew.-%, beträgt.

7. Elektrode nach einem der vorhergehenden Ansprüche, dadurch gekennzeichnet, daß die Komponenten a) und b) des sie bildenden Verbundkörpers durch Verschrauben oder Verlöten miteinander verbunden sind.

8. Elektrode nach einem der vorhergehenden Ansprüche, dadurch gekennzeichnet, daß die Komponente a) das Anfangsteil und die Komponente b) das Endteil der Elektrode bildet.

9. Elektrode nach einem der vorhergehenden Ansprüche, dadurch gekennzeichnet, daß der sie bildende Verbundkörper aus einem stäbchenförmigen oder stiftförmigen Körper aus der Komponente a) und einem an dessen einem Ende befindlichen kugelförmigen Körper aus der Komponente b) besteht.

10. Elektrode nach Anspruch 9, dadurch gekennzeichnet, daß der stäbchenförmige oder stiftförmige Körper eine Länge von etwa 8 bis 12 mm und einen Durchmesser von etwa 1,5 bis 2,5 mm hat und der kugelförmige Körper einen Durchmesser von etwa 4 bis 6 mm aufweist.

Fig. 1

Fig. 2

Fig. 3